# EUROPEAN PATENT APPLICATION

(11) **EP 4 106 251 A1**
(43) Date of publication of application: **21.12.2022**
(21) Application number: 21753243.1
(22) Date of filing: 29.01.2021
(51) Int. Cl.: H04L 5/00

(54) **METHOD AND APPARATUS FOR DETERMINING CPU OCCUPANCY TIME FOR MULTIPLE PDCCH REPEATED TRANSMISSION SCENARIO, STORAGE MEDIUM AND TERMINAL**

(30) Priority: 11.02.2020 CN 202010085846
(71) Applicant: Beijing Unisoc Communications Technology Co., Ltd., Beijing 100083 (CN)
(72) Inventor: MA, Dawei, Shanghai 201203 (CN)
(74) Representative: Epping - Hermann - Fischer
(86) International application number: PCT/CN2021/074326
(87) International publication number: WO 2021/159971

(57) **Abstract**

A method and apparatus for determining CPU occupancy time for a multiple PDCCH repeated transmission scenario, a storage medium, and a terminal. The method comprises: in response to receiving a PDCCH, determining whether the time domain position of the last PDCCH can be determined according to a currently received PDCCH and multiple PDCCH configuration information, wherein the multiple PDCCH configuration information is used to configure the candidate resource position of each PDCCH; and if the time domain position of the last PDCCH can be determined, then determining the CPU occupancy time according to the time domain position of the last PDCCH and the time domain position of a PUSCH scheduled by the currently received PDCCH. The solution provided by the present invention may optimize the CSI calculation logic in the multiple PDCCH repeated transmission scenario, reasonably determine the CPU occupancy time, optimize the UE performance, and reduce the power consumption.

## Description

### CROSS-REFERENCE TO RELATED APPLICATIONS

This application claims priority to Chinese Patent Application No. 202010085846.5, filed on February 11, 2020, and entitled "METHOD AND APPARATUS FOR DETERMINING CPU OCCUPANCY TIME FOR MULTIPLE PDCCH REPEATED TRANSMISSION SCENARIO, STORAGE MEDIUM AND TERMINAL", the entire disclosure of which is incorporated herein.

### TECHNICAL FIELD

The present disclosure generally relates to communication technology field, and more particularly, to a method and apparatus for determining Channel state information Processing Unit (CPU) occupancy time for a multiple Physical Downlink Control Channel (PDCCH) repeated transmission scenario, a storage medium and a terminal.

### BACKGROUND

When a base station sends a PDCCH to a User Equipment (UE) to trigger an aperiodic Channel State Information Reference Signal (CSI-RS)-based aperiodic CSI reporting on a Physical Uplink Share Channel (PUSCH), the UE calls a CSI Processing Unit (CPU), according to New Radio (NR) specifications, to perform CSI calculation. CPU occupancy time is determined based on time domain positions of the PDCCH and its scheduled PUSCH.

The current specifications only support each PDCCH to independently schedule the PUSCH to send uplink data, and does not support a plurality of PDCCHs to schedule a same PUSCH.

To improve transmission reliability of PDCCH, the 3rd Generation Partnership Project (3GPP) discussed how to use PDCCH repeated transmission to improve the reliability of PDCCH in a research stage of Release 16 (referred to as Rel-16), and further clarify requirements on PDCCH reliability in Rel-17.

As determination logic of a CPU occupancy time in existing specifications is only applicable to a scenario where each PDCCH independently schedules a PUSCH, when a base station needs to use a plurality of PDCCHs to repeatedly trigger a same aperiodic CSI-RS-based aperiodic CSI reporting, the existing techniques cannot determine the CPU occupancy time reasonably.

### SUMMARY

Embodiments of the present disclosure provide solutions for determining a CPU occupancy time in a multiple PDCCH repeated transmission scenario.

In an embodiment of the present disclosure, a method for determining CPU occupancy time for a multiple PDCCH repeated transmission scenario is provided, including: in response to receiving a PDCCH currently, determining whether a time domain position of a last PDCCH can be determined based on the currently received PDCCH and configuration information for a plurality of PDCCHs, wherein the currently received PDCCH and the last PDCCH belong to the plurality of PDCCHs, and the configuration information for the plurality of PDCCHs is used to configure candidate resource positions of each of the plurality of PDCCHs; and based on that the time domain position of the last PDCCH can be determined, determining the CPU occupancy time based on the time domain position of the last PDCCH and a time domain position of a PUSCH scheduled by the currently received PDCCH.

Optionally, said determining the CPU occupancy time based on the time domain position of the last PDCCH and a time domain position of a PUSCH scheduled by the currently received PDCCH includes: determining a time period from an end of a last symbol of the last PDCCH to an end of a last symbol of a last PUSCH scheduled by the currently received PDCCH as the CPU occupancy time.

Optionally, the method further includes: based on that the time domain position of the last PDCCH cannot be determined, determining the CPU occupancy time based on a time domain position of the currently received PDCCH and the time domain position of the PUSCH scheduled by the currently received PDCCH.

Optionally, said determining the CPU occupancy time based on a time domain position of the currently received PDCCH and the time domain position of the PUSCH scheduled by the currently received PDCCH includes: determining a time period from an end of a last symbol of the currently received PDCCH to an end of a last symbol of a last PUSCH scheduled by the currently received PDCCH as the CPU occupancy time.

Optionally, an occupancy state of the CPU remains unchanged during a time domain period of the plurality of PDCCHs, wherein the time domain period of the plurality of PDCCHs is from an end of a last symbol of a first PDCCH of the plurality of PDCCH to an end of a last symbol of a last PDCCH of the plurality of PDCCHs.

Optionally, the configuration information for the plurality of PDCCHs is carried by high-layer configuration information.

Optionally, the multiple PDCCH repeated transmission is used to trigger a same aperiodic CSI-RS based aperiodic CSI.

Optionally, the multiple PDCCH repeated transmission is used to schedule at least one PUSCH.

Optionally, the plurality of PDCCHs are used to schedule different PUSCHs respectively, and numbers of PUSCHs scheduled by different PDCCHs are the same or different.

Optionally, each of the plurality of PDCCHs is used to schedule at least one unsent PUSCH in the at least one PUSCH.

Optionally, each of the plurality of PDCCHs is used to schedule the same one or more PUSCHs.

In an embodiment of the present disclosure, an apparatus for determining CPU occupancy time for a multiple PDCCH repeated transmission scenario is provided, including: a first determining circuitry configured to: in response to receiving a PDCCH currently, determine whether a time domain position of a last PDCCH can be determined based on the currently received PDCCH and configuration information for a plurality of PDCCHs, wherein the currently received PDCCH and the last PDCCH belong to the plurality of PDCCHs, and the configuration information for the plurality of PDCCHs is used to configure candidate resource positions of each of the plurality of PDCCHs; and a second determining circuitry configured to: based on that the time domain position of the last PDCCH can be determined, determine the CPU occupancy time based on the time domain position of the last PDCCH and a time domain position of a PUSCH scheduled by the currently received PDCCH.

In an embodiment of the present disclosure, a storage medium having computer instructions stored therein is provided, wherein when the computer instructions are executed, the above method is performed.

In an embodiment of the present disclosure, a terminal including a memory and a processor is provided, wherein the memory has computer instructions stored therein, and when the processor executes the computer instructions, the above method is performed.

Embodiments of the present disclosure may provide following advantages.

In embodiments of the present disclosure, a method for determining CPU occupancy time for a multiple PDCCH repeated transmission scenario is provided, including: in response to receiving a PDCCH currently, determining whether a time domain position of a last PDCCH can be determined based on the currently received PDCCH and configuration information for a plurality of PDCCHs, wherein the currently received PDCCH and the last PDCCH belong to the plurality of PDCCHs, and the configuration information for the plurality of PDCCHs is used to configure candidate resource positions of each of the plurality of PDCCHs; and based on that the time domain position of the last PDCCH can be determined, determining the CPU occupancy time based on the time domain position of the last PDCCH and a time domain position of a PUSCH scheduled by the currently received PDCCH.

Compared with an existing CPU occupancy time calculation method that is only applicable to a scenario where a single PDCCH independently schedules a PUSCH, embodiments of the present disclosure fully consider characteristics of the multiple PDCCH repeated transmission scenario. When the time domain position of the last PDCCH in the plurality of PDCCHs can be determined, the start time of CPU occupancy is determined according to the time domain position of the last PDCCH, and the end time of CPU occupancy is determined according to the time domain position of the PUSCH scheduled by the currently received PDCCH. In this way, CSI calculation logic in the multiple PDCCH repeated transmission scenario may be optimized. When the base station uses a plurality of PDCCHs to repeatedly trigger the same aperiodic CSI-RS-based aperiodic CSI reporting, the UE adopting the solutions of the embodiments can reasonably determine the CPU occupancy time, optimize UE performance, and reduce power consumption.

Further, if the time domain position of the last PDCCH cannot be determined, the CPU occupancy time is determined based on the time domain position of the currently received PDCCH and the time domain position of the PUSCH scheduled by the currently received PDCCH. Therefore, when the time domain position of the last PDCCH cannot be determined, the UE executing the solution of this embodiment can still determine a reasonable CPU occupancy time, so as to ensure that the UE and the base station can transmit and receive data successfully and efficiently.

### BRIEF DESCRIPTION OF THE DRAWINGS

FIG. 1 is a flow chart of a method for determining CPU occupancy time for a multiple PDCCH repeated transmission scenario according to an embodiment;
FIG. 2 is a time domain diagram of an application scenario according to an embodiment;
FIG. 3 is a time domain diagram of an application scenario according to an embodiment;
FIG. 4 is a time domain diagram of an application scenario according to an embodiment; and
FIG. 5 is a structural diagram of an apparatus for determining CPU occupancy time for a multiple PDCCH repeated transmission scenario according to an embodiment.

### DETAILED DESCRIPTION

As described in the background, the existing calculation method of CPU occupancy time is only applicable to a scenario where a single PDCCH independently schedules a PUSCH. Specifically, the CPU occupancy time starts from an end of a last symbol of the PDCCH sent by the base station this time, and ends at an end of a last symbol of a last PUSCH carrying a CSI report.

As existing specification only supports that each PDCCH independently schedules the PUSCH to send uplink data, the UE can determine a start time of the CPU occupancy merely according to a time domain position of a currently received PDCCH.

However, due to requirements for reliability of PDCCH transmission proposed by the latest specification, a base station may use a plurality of PDCCHs for retransmission to schedule at least one PUSCH, and the scheduled at least one PUSCH is used to transmit the same aperiodic CSI-RS based aperiodic CSI reporting. This is the multiple PDCCH repeated transmission scenario.

In the multiple PDCCH repeated transmission scenario, the UE receives a plurality of PDCCHs continuously or at intervals, and the plurality of PDCCHs schedule one or more PUSCHs to transmit the same CSI report. In this case, there are a plurality of PDCCHs, and the UE does not know, based on the existing specifications, the start time of CPU occupancy should be determined based on a time domain position of which PDCCH. Similarly, there may be multiple PUSCHs, and the UE does not know, based on the existing specifications, the end time of CPU occupancy should be determined based on a time domain position of which PUSCH.

Therefore, determination logic of the CPU occupancy time in the existing techniques is not applicable to the multiple PDCCH repeated transmission scenario.

In embodiments of the present disclosure, a method for determining CPU occupancy time for a multiple PDCCH repeated transmission scenario is provided, including: in response to receiving a PDCCH currently, determining whether a time domain position of a last PDCCH can be determined based on the currently received PDCCH and configuration information for a plurality of PDCCHs, wherein the currently received PDCCH and the last PDCCH belong to the plurality of PDCCHs, and the configuration information for the plurality of PDCCHs is used to configure candidate resource positions of each of the plurality of PDCCHs; and based on that the time domain position of the last PDCCH can be determined, determining the CPU occupancy time based on the time domain position of the last PDCCH and a time domain position of a PUSCH scheduled by the currently received PDCCH.

Embodiments of the present disclosure fully consider characteristics of the multiple PDCCH repeated transmission scenario. When the time domain position of the last PDCCH in the plurality of PDCCHs can be determined, the start time of CPU occupancy is determined according to the time domain position of the last PDCCH, and the end time of CPU occupancy is determined according to the time domain position of the PUSCH scheduled by the currently received PDCCH. In this way, CSI calculation logic in the multiple PDCCH repeated transmission scenario may be optimized. When the base station uses the plurality of PDCCHs to repeatedly trigger the same aperiodic CSI-RS-based aperiodic CSI reporting, the UE adopting the solutions of the embodiments can reasonably determine the CPU occupancy time, optimize UE performance, and reduce power consumption.

In order to clarify the object, characteristic and advantages of embodiments of the present disclosure, embodiments of present disclosure will be described clearly in detail in conjunction with accompanying drawings.

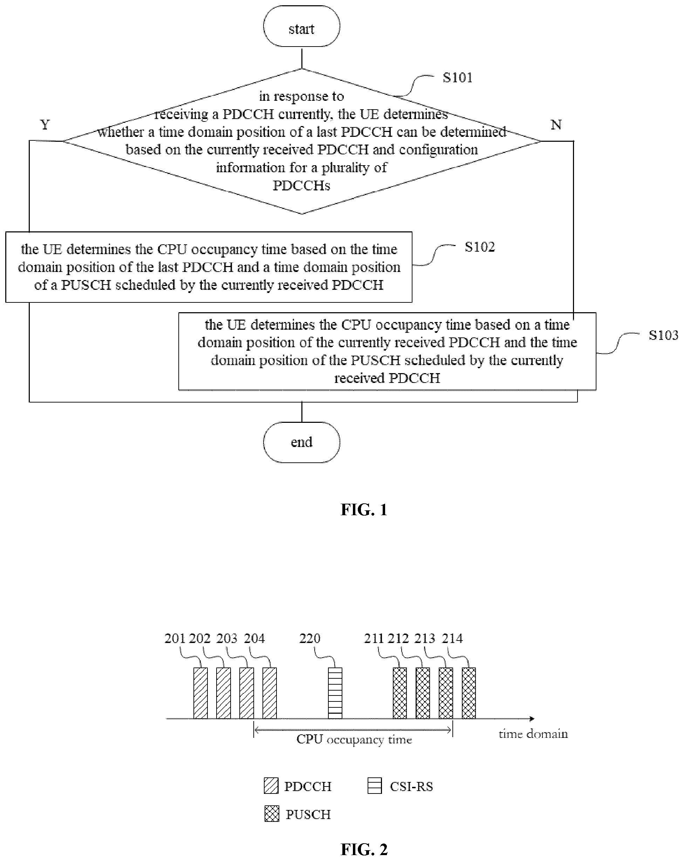

FIG. 1 is a flow chart of a method for determining CPU occupancy time for a multiple PDCCH repeated transmission scenario according to an embodiment. The method may be applied to a terminal side, such as a UE in the terminal side.

Referring to FIG. 1, the method includes S101, S102 and S103.

In S101, in response to receiving a PDCCH currently, the UE determines whether a time domain position of a last PDCCH can be determined based on the currently received PDCCH and configuration information for a plurality of PDCCHs, wherein the currently received PDCCH and the last PDCCH belong to the plurality of PDCCHs, and the configuration information for the plurality of PDCCHs is used to configure candidate resource positions of each of the plurality ofPDCCHs.

Based on a determination result of S101 being positive, i.e., the time domain position of the last PDCCH can be determined, the method further includes S102. In S102, the UE determines the CPU occupancy time based on the time domain position of the last PDCCH and a time domain position of a PUSCH scheduled by the currently received PDCCH.

Based on the determination result of S101 being negative, i.e., the time domain position of the last PDCCH cannot be determined, the method further includes S103. In S103, the UE determines the CPU occupancy time based on a time domain position of the currently received PDCCH and the time domain position of the PUSCH scheduled by the currently received PDCCH.

In S101, when the PDCCH is received and successfully decoded, it is determined whether the time domain position of the last PDCCH can be determined.

In some embodiments, the multiple PDCCH repeated transmission is used to schedule at least one PUSCH, the PDCCHs are used to carry downlink control information, and the PUSCH is used to carry uplink data information. In some embodiments, uplink data is a CSI report.

Specifically, the base station uses the plurality of PDCCHs to repeatedly trigger the same aperiodic CSI-RS-based aperiodic CSI to be reported on at least one PUSCH.

In other words, in the multiple PDCCH repeated transmission scenario described in the embodiments, a plurality of PDCCHs schedule at least one PUSCH, and the scheduled at least one PUSCH carries the same CSI report.

In some embodiments, the configuration information for the plurality of PDCCHs is carried by high-layer configuration information. For example, the base station may indicate, through the high-layer configuration information, an ordinal number of the PDCCH the UE currently receives among the plurality of PDCCHs.

Accordingly, in S101, the UE may determine whether the currently received PDCCH is the last PDCCH in the plurality of PDCCHs based on the configuration information for the plurality of PDCCHs. If it is the last one, the time domain position of the currently received PDCCH is the time domain position of the last PDCCH. If it is not the last one, it indicates that the last PDCCH has not been received.

The high-layer configuration information may include Radio Resource Control (RRC) signaling.

In some embodiments, the UE may determine the ordinal number of the currently received PDCCH among the plurality of PDCCHs based on configuration information for the plurality of PDCCHs in the higher-layer configuration information and scheduling information in the currently received PDCCH.

In some embodiments, for each PDCCH, the PDCCH may include multiple consecutive symbols, and the PUSCH scheduled by the PDCCH may also include multiple consecutive symbols.

Accordingly, in S102, a time period from an end of a last symbol of the last PDCCH to an end of a last symbol of a last PUSCH scheduled by the currently received PDCCH is determined as the CPU occupancy time.

In S103, a time period from an end of a last symbol of the currently received PDCCH to an end of a last symbol of a last PUSCH scheduled by the currently received PDCCH is determined as the CPU occupancy time.

In some embodiments, an occupancy status of the CPU remains unchanged during a time domain period of the plurality of PDCCHs, wherein the time domain period of the plurality of PDCCHs is from an end of a last symbol of a first PDCCH of the plurality of PDCCH to an end of a last symbol of a last PDCCH of the plurality of PDCCHs. In this manner, inconsistent understanding of the CPU occupancy time by the base station and the UE may be effectively avoided.

Specifically, the UE in the embodiments does not expect a change in CPU occupancy status between the end of the last symbol of the first PDCCH in the plurality of PDCCHs and the end of the last symbol of the last PDCCH in the plurality of PDCCHs.

For example, no additional CPU occupancy occurs during the time domain period of the plurality of PDCCHs. The additional CPU occupancy refers to that the CPU is also occupied to perform other CSI computations in addition to the CSI computations made for performing PUSCH uplink data transmission scheduled by the plurality of PDCCHs.

In some embodiments, the multiple PDCCH repeated transmission may be used to trigger the same aperiodic CSI-RS based aperiodic CSI reporting. Specifically, at least one PUSCH scheduled by the plurality of PDCCHs carries same downlink data.

In the multiple PDCCH repeated transmission scenario, N PDCCHs are repeatedly transmitted to schedule M PUSCHs, where N>1, M≥1, and the M PUSCHs carry the same downlink data.

Specific scheduling methods may include following three ones.
Method 1: Each PDCCH schedules a different PUSCH, and M=N. That is, the N PDCCHs are used to schedule different PUSCHs respectively, and numbers of PUSCHs scheduled by different PDCCHs are the same or different.
Method 2: Each PDCCH schedules K PUSCHs that have not been sent, and 1≤K≤M. That is, each PDCCH in the plurality of PDCCHs is used to schedule at least one unsent PUSCH among the M PUSCHs.
Method 3: Each PDCCH schedules the same M PUSCHs, which corresponds to a situation of K=M in Method 2. That is, each PDCCH in the plurality of PDCCHs is used to schedule the same n PUSCHs, 1≤n≤M.

Specific processes of determining the CPU occupancy time by the UE using the solutions described in the embodiments in the above three manners are described in detail hereafter.

In a typical application scenario, N PDCCHs use the above method 1 to schedule M PUSCHs, assuming that M=N=4. Referring to FIG. 2, PDCCH201 schedules PUSCH211, PDCCH202 schedules PUSCH212, PDCCH203 schedules PUSCH213, and PDCCH204 schedules PUSCH214.

In response to receiving the PDCCH201, the PDCCH 202, PDCCH 203 and PDCCH 204, the UE is triggered to report CSI based on CSI-RS220, and executes the solutions of the embodiment as shown in FIG. 1 to determine the CPU occupancy time. During the CPU occupancy time, the UE performs CSI calculation to form a CSI report, and transmits the CSI report on the PUSCH211, PUSCH212, PUSCH213 and PUSCH214.

It is assumed that the UE currently receives the PDCCH203 and is triggered to report the aperiodic CSI-RS220-based aperiodic CSI on the PUSCH213. As the UE cannot obtain the time domain position of the PDCCH204, in the scenario as shown in FIG. 2, the CPU occupancy time starts from an end of a last symbol of the PDCCH 203 and ends at an end of a last symbol of the PUSCH213.

A reason why the UE cannot obtain the time domain position of PDCCH204 may include: the currently received PDCCH 203 being not the last one of the four PDCCHs.

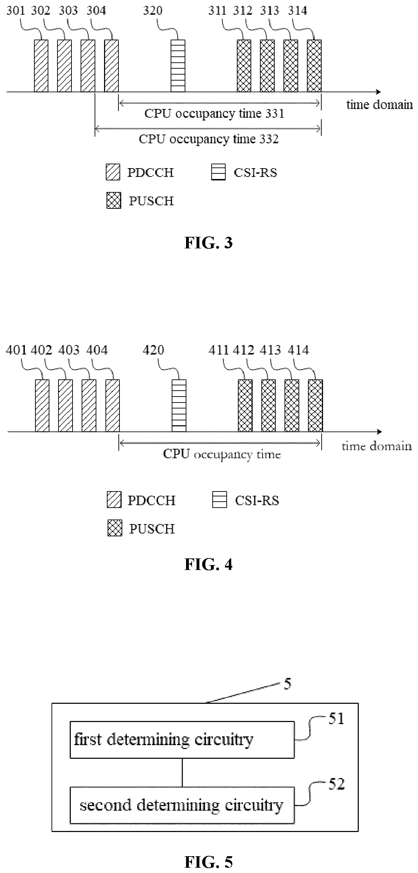

In a typical application scenario, N PDCCHs use the above-mentioned method 2 to schedule M PUSCHs, assuming that M=N=4. Referring to FIG. 3, PDCCH301 schedules PUSCH311, PUSCH312, PUSCH313 and PUSCH314, PDCCH302 schedules PUSCH312, PUSCH313 and PUSCH314, PDCCH303 schedules PUSCH313 and PUSCH314, and PDCCH304 schedules PUSCH314.

In response to receiving the PDCCH301, PDCCH302, PDCCH303 and PDCCH304, the UE is triggered to report CSI based on CSI-RS320, the UE performs CSI calculation to form a CSI report, and sends the CSI report on the PUSCH311, PUSCH312, PUSCH313 and PUSCH314.

It is assumed that the UE currently receives PDCCH 303 and is triggered to report aperiodic CSI-RS320-based aperiodic CSI on PUSCH313 and PUSCH314.

If the UE can determine the time domain position of PDCCH 304, the CPU occupancy time starts from the end of the last symbol of PDCCH304, and ends at the end of the last symbol of PUSCH314, as shown by the CPU occupancy time 331 in FIG. 3.

If the UE cannot determine the time domain position of PDCCH304, the CPU occupancy time starts from the end of the last symbol of PDCCH303, and ends at the end of the last symbol of the PUSCH314, as shown by the CPU occupancy time 332 in FIG. 3.

Further, the UE does not expect a change in CPU occupancy status between the position of the last symbol of PDCCH301 and the end of the last symbol of PDCCH304.

A reason for the UE determining the time domain position of PDCCH304 may include: the base station indicating the time domain positions of PDCCH301, PDCCH302, PDCCH 303 and PDCCH 304 through high-layer configuration information.

In a typical application scenario, N PDCCHs use the above-mentioned method 3 to schedule M PUSCHs, assuming that M=N=4. Referring to FIG. 4, PDCCH401 schedules PUSCH411, PUSCH412, PUSCH413 and PUSCH414, PDCCH402 schedules PUSCH411, PUSCH412, PUSCH413 and PUSCH414, PDCCH403 schedules PUSCH411, PUSCH412, PUSCH413 and PUSCH414, and PDCCH404 schedules PUSCH411, PUSCH412, PUSCH413 and PUSCH414.

In response to receiving PDCCH401, PDCCH402, PDCCH403 and PDCCH404, the UE is triggered to report CSI based on CSI-RS420, the UE performs CSI calculation to form a CSI report, and transmits the CSI report on PUSCH411, PUSCH412, PUSCH413 and PUSCH414.

When the UE can determine the time domain position of PDCCH404, the CPU occupancy time starts from the end of the last symbol of PDCCH404 and ends at the end of the last symbol of the PUSCH414.

From above, the embodiments of the present disclosure fully consider characteristics of the multiple PDCCH repeated transmission scenario. When the time domain position of the last PDCCH in the plurality of PDCCHs can be determined, the start time of CPU occupancy is determined based on the time domain position of the last PDCCH, and the end time of CPU occupancy is determined based on the time domain position of the PUSCH scheduled by the currently received PDCCH.

In this way, CSI calculation logic in the multiple PDCCH repeated transmission scenario may be optimized. When the base station uses the plurality of PDCCHs to repeatedly trigger the same aperiodic CSI-RS-based aperiodic CSI reporting, the UE adopting the solutions of the embodiments can reasonably determine the CPU occupancy time, optimize UE performance, and reduce power consumption.

Further, if the time domain position of the last PDCCH cannot be determined, the UE can still determine a reasonable CPU occupancy time, so as to ensure that the UE and the base station can transmit and receive data successfully and efficiently.

FIG. 5 is a structural diagram of an apparatus for determining CPU occupancy time for a multiple PDCCH repeated transmission scenario according to an embodiment. Those skilled in the art could understand that the apparatus 5 for determining CPU occupancy time for a multiple PDCCH repeated transmission scenario may be configured to execute the method steps as shown in FIG. 1 to FIG. 4.

In some embodiments, the apparatus 5 may include: a first determining circuitry 51 configured to: in response to receiving a PDCCH currently, determine whether a time domain position of a last PDCCH can be determined based on the currently received PDCCH and configuration information for a plurality of PDCCHs, wherein the currently received PDCCH and the last PDCCH belong to the plurality of PDCCHs, and the configuration information for the plurality of PDCCHs is used to configure candidate resource positions of each of the plurality of PDCCHs; and a second determining circuitry 52 configured to: based on that the time domain position of the last PDCCH can be determined, determine the CPU occupancy time based on the time domain position of the last PDCCH and a time domain position of a PUSCH scheduled by the currently received PDCCH.

Working principles and modes of the apparatus 5 may be referred to the above descriptions of FIG. 1 to FIG. 4, and are not described in detail here.

In an embodiment of the present disclosure, a storage medium having computer instructions stored therein is provided, where when the computer instructions are executed, the above method as shown in FIG. 1 to FIG. 4 is performed. In some embodiments, the storage medium may be a computer readable storage medium, and may include a non-volatile or a non-transitory memory, or include a ROM, a RAM, a magnetic disk or an optical disk.

In an embodiment of the present disclosure, a terminal including a memory and a processor is provided, where the memory has computer instructions stored therein, and when the processor executes the computer instructions, the above method as shown in FIG. 1 to FIG. 4 is performed. The terminal may be a UE.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for determining Channel state information Processing Unit (CPU) occupancy time for a multiple Physical Downlink Control Channel (PDCCH) repeated transmission scenario, **characterized by** comprising:
in response to receiving a PDCCH currently, determining whether a time domain position of a last PDCCH can be determined based on the currently received PDCCH and configuration information for a plurality of PDCCHs, wherein the currently received PDCCH and the last PDCCH belong to the plurality of PDCCHs, and the configuration information for the plurality of PDCCHs is used to configure candidate resource positions of each of the plurality of PDCCHs; and
based on that the time domain position of the last PDCCH can be determined, determining the CPU occupancy time based on the time domain position of the last PDCCH and a time domain position of a Physical Uplink Share Channel (PUSCH) scheduled by the currently received PDCCH.

2. The method according to claim 1, **characterized in that** said determining the CPU occupancy time based on the time domain position of the last PDCCH and a time domain position of a PUSCH scheduled by the currently received PDCCH comprises:
determining a time period from an end of a last symbol of the last PDCCH to an end of a last symbol of a last PUSCH scheduled by the currently received PDCCH as the CPU occupancy time.

3. The method according to claim 1, **characterized by** further comprising:
based on that the time domain position of the last PDCCH cannot be determined, determining the CPU occupancy time based on a time domain position of the currently received PDCCH and the time domain position of the PUSCH scheduled by the currently received PDCCH.

4. The method according to claim 3, **characterized in that** said determining the CPU occupancy time based on a time domain position of the currently received PDCCH and the time domain position of the PUSCH scheduled by the currently received PDCCH comprises:
determining a time period from an end of a last symbol of the currently received PDCCH to an end of a last symbol of a last PUSCH scheduled by the currently received PDCCH as the CPU occupancy time.

5. The method according to claim 3 or 4, **characterized in that** an occupancy status of the CPU remains unchanged during a time domain period of the plurality of PDCCHs, wherein the time domain period of the plurality of PDCCHs is from an end of a last symbol of a first PDCCH of the plurality of PDCCH to an end of a last symbol of a last PDCCH of the plurality of PDCCHs.

6. The method according to any one of claims 1 to 4, **characterized in that** the configuration information for the plurality of PDCCHs is carried by high-layer configuration information.

7. The method according to any one of claims 1 to 4, **characterized in that** the multiple PDCCH repeated transmission is used to trigger a same aperiodic Channel State Information Reference Signal (CSI-RS) based aperiodic CSI.

8. The method according to any one of claims 1 to 4, **characterized in that** the multiple PDCCH repeated transmission is used to schedule at least one PUSCH.

9. The method according to claim 8, **characterized in that** the plurality of PDCCHs are used to schedule different PUSCHs respectively, and numbers of PUSCHs scheduled by different PDCCHs are the same or different.

10. The method according to claim 8, **characterized in that** each of the plurality of PDCCHs is used to schedule at least one unsent PUSCH in the at least one PUSCH.

11. The method according to claim 8, **characterized in that** each of the plurality of PDCCHs is used to schedule the same one or more PUSCHs.

12. An apparatus for determining Channel state information Processing Unit (CPU) occupancy time for a multiple Physical Downlink Control Channel (PDCCH) repeated transmission scenario, **characterized by** comprising:
a first determining circuitry configured to: in response to receiving a PDCCH currently, determine whether a time domain position of a last PDCCH can be determined based on the currently received PDCCH and configuration information for a plurality of PDCCHs, wherein the currently received PDCCH and the last PDCCH belong to the plurality of PDCCHs, and the configuration information for the plurality of PDCCHs is used to configure candidate resource positions of each of the plurality of PDCCHs; and
a second determining circuitry configured to: based on that the time domain position of the last PDCCH can be determined, determine the CPU occupancy time based on the time domain position of the last PDCCH and a time domain position of a Physical Uplink Share Channel (PUSCH) scheduled by the currently received PDCCH.

13. A storage medium having computer instructions stored therein, **characterized in that** when the computer instructions are executed, the method of any one of claims 1 to 11 is performed.

14. A terminal comprising a memory and a processor, **characterized in that** the memory has computer instructions stored therein, and when the processor executes the computer instructions, the method of any one of claims 1 to 11 is performed.
